**Europäisches Patentamt**

**European Patent Office**

**Office européen des brevets**

(19)

(11) Publication number: **0 173 479**
**B1**

(12) **EUROPEAN PATENT SPECIFICATION**

(45) Date of publication of patent specification: **29.11.89**

(51) Int. Cl.⁴: **C 12 C 9/02**

(21) Application number: **85305555.6**

(22) Date of filing: **05.08.85**

(54) **Extraction and isomerisation of alpha-acids from hop extracts.**

(30) Priority: **06.08.84 GB 8420009**

(43) Date of publication of application:
**05.03.86 Bulletin 86/10**

(45) Publication of the grant of the patent:
**29.11.89 Bulletin 89/48**

(84) Designated Contracting States:
**AT BE CH DE FR GB IT LI LU NL SE**

(56) References cited:
**DE-A-1 442 159**
**DE-A-1 442 161**
**GB-A-1 064 068**
**GB-A-2 022 083**

**CHEMISTRY AND INDUSTRY, no. 22, 1st June 1968, pages 720-721, London, GB; P.V.R. SHANNON: "Formation of a dihydrofuran on mild air-oxidation of colupulone"**

(73) Proprietor: **The English Hop Processing Company Ltd**
**Hop Pocket Lane Paddock Wood**
**Tonbridge, Kent TN12 6BY (GB)**

(72) Inventor: **Patel, Chandrakant Chhaganbhai**
**12, Park Road**
**Redhill Surrey (GB)**

(74) Representative: **Coleiro, Raymond et al**
**MEWBURN ELLIS & CO. 2/3 Cursitor Street**
**London EC4A 1BQ (GB)**

Courier Press, Leamington Spa, England.

**Description**

Field of the invention

This invention relates to the extraction and utilisation of the bitter principles of hops.

Background of the invention

It is well known that during the traditional process of brewing, hops are boiled with the wort prior to the fermentation stage in order to impart bitter flavours.

Hops consist of resins, oils, waxes, water soluble materials (sugars, tannins and proteins) and cellulose. The resins and volatile oil are located in the lupulin glands and it is this material which is of greatest use to the brewer.

The resins may be divided into "hard resins" which are almost insoluble in non polar solvents (hexane and liquid carbon dioxide) and are regarded as being of little value in brewing, and the "soft resins". The latter include two important groups of weakly acidic compounds called the α-acids and β-acids respectively.

The α-acids, which are distinctly more acidic than the β-acids, are known generically as "humulones" and are converted by boiling with wort to iso-α-acids which are primarily responsible for the bitter flavour of beer. The β-acids, known generically as "lupulones", have little brewing value, if any, as such but the brewer finds use for certain derivatives thereof formed by oxidation.

The α-acids include humulone, cohumulone, adhumulone and its analogues and are usually referred to collectively as "humulones". Their isomerized forms, which are the principal bittering agents obtained from hops, are termed herein iso-α-acids and include isohumulone and its analogues, etc., and are known collectively as "isohumulones".

Hops are a relatively unstable commodity due to the ease with which the α- and β-acids auto-oxidise and are degraded to non-bitter and water insoluble materials (hard resins). Furthermore, the abovementioned process of boiling the hops with the wort is a comparatively inefficient process since the majority of the potential bittering materials, the α-acids, are lost during the brewing process.

The first approach of commerce to the problem, caused by the instability of the dried compressed hops, was to extract the useful components using volatile organic solvents, such as methanol, hexane, methylene chloride and trichloroethylene.

Hop extracts made with such solvents are, in fact, very stable and can be stored in hermetically sealed containers for years without appreciable loss. However, hop extracts, although stable when compared to the hops, only marginally increase the utilisation of the potential bittering components during the boiling of the wort. The inefficient conversion of the α-acids during boiling, and the subsequent absorption of both α-acids and iso-α-acids onto the precipitated wort-insoluble matter, known as "trub" (coagulated proteins, etc.) and absorption onto the yeast during the fermentation process, are responsible for similar losses to those occurring when using hops.

To overcome these problems, the next major step forward was the proposal of separately extracting the bitter principles of the hops, isolating the α-acids, converting these by an isomerisation process to the relatively pure iso-α-acids and adding these post fermentation to the beer prior to the main filtration stage. GB 855401 describes a process in which hops are (or a hop extract is) boiled in aqueous alkali to simultaneously extract α-acids and convert them to iso-α-acids, which are then removed by solvent extraction.

The production of isomerised post fermentation bittering materials was not without its own peculiar problems. Early products were crude, containing numerous acidic materials which were not iso-α-acids. Their solubility in distilled water was poor and their utilisation when added to beer was often in the region of 60—70%. A greater disadvantage was that material derived from the hard resin fraction of the hops (hard resins are partly made up of oxidised and degraded α- and beta-acids) was carried through the various processes and was present in the material added post fermentation to beer. These hard resin derived materials have been shown to be responsible for "gushing" or "over foaming" of bottled beer.

In order to obtain an iso-alpha-acids extract of higher purity, many processes have been developed.

In some such known processes, the alpha-acids are extracted from hops or a hop extract, separated from other undesired products such as beta-acids and thereafter isomerised. Most of these known processes involve the use of solvents at least in the extraction stage (see for example GB—A—1192681 and GB—A—1274678). Such processes usually require many elaborate stages of purification, for example, chromatography (GB—A—1183669) or a long series of separation steps (GB—A—1404713), or the use of expensive reagents such as calcium or magnesium salts (GB—A—1362695).

DE—A—1442159 discloses the extraction of alpha-acids from hops using an organic solvent such as hexane and thereafter recovering the alpha-acids from the solvent extract in the form of their alkali salts by treatment of the solvent extract with an aqueous alkali in a stoichiometric amount with respect to alpha-acids. If the temperature is above 50—60°C, concomitant isomerization of the alpha-acids occurs.

Recently there has been a tendency to avoid using organic solvents, particularly chlorinated hydrocarbons, in the food and beverage industries.

This has led to the development of a process in which hops are extracted using liquid (or supercritical) carbon dioxide to provide a hop extract containing unisomerised α-acids and various other ingredients, including hop oil, fats and waxes, various uncharacterised resins and β-acids (GB 1575827).

Various processes are known in which hops or hop extracts are treated in an aqueous medium to provide an iso-α-acids-containing product (see, for example, GB 1171021, EP—A—0020087, GB 1576729 and GB—A—2022083).

GB 1576729, GB 2022083A and EP—A—0020087 describe respective processes in which extraction of α-acids from a liquid carbon dioxide extract is carried out by boiling the extract in aqueous sodium or potassium carbonate under an atmosphere of nitrogen, the alkali being present in a large excess with respect to the α-acids in the extract (Example 1 of GB 1576729 uses an equivalent ratio $Na_2CO_3$/α-acids of 15/1, Example 1 of GB 2022083A uses an equivalent ratio $K_2CO_3$/α-acids of 2/1 and Example 5 of EP—A—0020087 uses an equivalent ratio $K_2CO_3$/α-acids of 2/1). Under such conditions simultaneous extraction and isomerisation takes place and a significant quantity of β-acids are extracted into the aqueous phase.

Such β-acids are difficult to remove from the aqueous phase and prevent efficient separation of the pure iso-α-acids. Furthermore, the product is loaded with large quantities of undesirable organic salts. Such processes may also result in a product in which the iso-α-acids are partitioned between several distinct phases (see GB—A—2022083). A gum-like precipitate contains most of the iso-α-acids and this tends to stick to equipment, etc.

The difficulties associated with handling and treating resins obtained by direct alkaline extraction of α-acids without the use of organic solvents have been recognised by other workers (see EP—A—0019462) and this has led to the use (as mentioned above with respect to solvent extraction) of expensive complexing agents providing insoluble metal ions such as magnesium (see GB 1395671 and EP—A—0019462).

Summary of the invention

The present invention provides a procedure which allows a hop extract produced by means of liquid carbon dioxide extraction, to be converted simply and efficiently into a stable isomerised extract which can be added to bright beer without appreciable increase in haze.

In contrast to the abovementioned known procsses, the procedure of the present invention is simple, direct and may be used to obtain a high conversion of α-acids into iso-α-acids of great purity with minimum of degradation.

The present invention provides, according to one aspect, a process for the extraction of alpha-acids, mainly in unisomerised form, from a hop extract obtained by treating hops with carbon dioxide in liquid form or at supercritical pressure which causes particularly high proportions of the alpha-acids to be extracted into a single, aqueous phase, leaving most, if not all, of the beta-acids and other unwanted components in an organic phase. These phases can be easily separated from one another. This process provides an aqueous solution of alpha-acids which are at least mainly in unisomerised form, which aqueous solution is a valuable starting material for an alpha-acids isomerisation process; the prior removal of a higher proportion of the beta-acids and other impurities by this process, as compared with conventional processes, before isomerisation, enables a more efficient subsequent isomerisation process to be carried out. Such an isomerisation process may be carried out by a conventional process.

However, the invention provides, according to another aspect, a process for the isomerisation of alpha-acids in aqueous solution which can be carried out quickly and easily to give particularly efficient conversion to the iso-alpha-acids. The process may be carried out so as to provide an aqueous solution containing the iso-alpha-acids, which solution contains only small quantities of inorganic salts and can be easily concentrated for use without the need for expensive and elaborate separation stages.

In a preferred procedure in accordance with the invention, a hop extract is subjected to the abovementioned alpha-acids extraction process according to one aspect of the invention. The resultant organic layer is then separated from the aqueous layer containing the alpha-acids, which alpha-acids are thereafter isomerised by subjecting the aqueous layer to the abovementioned isomerisation process according to another aspect of the invention.

Referring firstly to the alpha-acids extraction process of the invention, we find, surprisingly, that if a hop extract, especially a liquid $CO_2$ hop extract, is boiled with aqueous alkali present in a proportional amount, relative to the alpha-acids content, smaller than in conventional aqueous extraction processes, then a product is obtained which consists of an aqueous layer containing mainly unisomerised alpha-acids and an oily organic layer which comprises mainly beta-acids together with uncharacterised resins, fats and waxes.

In this alpha-acids extraction process of the invention the aqueous alkali is present in an equivalent ratio with respect to the alpha-acids content in the hop extract such that there is no more than a slight excess (calculated on the assumption that alpha-acids are divalent) of alkali, say an equivalent ratio of alkali:acids of no more than 1.2:1 (which, as a molar ratio may be expressed as 2.4/n:1, where n is the valency of the alkali—see below), and preferably an excess, more preferably a significant excess of alpha-acids.

The organic layer can be separated easily from the aqueous layer, and is useful as a starting material in a process for oxidizing beta-acids to produce products useful in the brewing industry. Such a process in

3

EP 0 173 479 B1

which the organic layer can be used as starting material is for example, that described by P. V. R. Shannon, Chem. & Ind., June 1968, page 720 et seq.

After this separation, the alpha-acids in the aqueous layer can be easily, quickly and efficiently isomerised, preferably in the manner later described.

When determining the abovementioned "equivalent ratio", it is assumed that the alpha-acids are divalent in nature as it is at present believed, though there are doubts about this. Thus when the alkali is dibasic potassium carbonate, an essentially stoichiometric amount of alkali relative to alpha-acids will be present when the equivalent ratio is 1/1 and the molar ratio is 1/1. When the alkali is monobasic sodium or potassium hydroxide an essentially stoichiometric amount of alkali relative to alpha-acids will be present when the equivalent ratio is 1/1, but the molar ratio is 2/1.

A preferred equivalent ratio lies within a range of about 0.4/1 to 0.8/1. This equivalent ratio corresponds to a molar ratio of 0.8/n:1 to 1.6/n:1, where n is the valency of the alkali.

In practice, the amount of alpha-acids present in a hop extract may be estimated by measuring the lead conductance value (LCV) thereof. The desired concentration of alkali may then be added.

The alpha-acids concentration in the mixture of the crude hop extract and aqueous alkali may be from 2 to 30 grams inclusive per 100 mls of aqueous alkali.

Preferred alkalis are potassium carbonate and bicarbonate, sodium carbonate and bicarbonate, though potassium and sodium hydroxides may alternatively be used. Especially preferred are potassium carbonate and bicarbonate.

Referring now to the isomerisation process of the invention, we find, surprisingly, that isomerisation of the $\alpha$-acids can be very rapidly, easily and efficiently effected with a high degree of process control if the $\alpha$-acids are present in an aqueous solution at a pH of about 7—8.5, preferably about 7.5, and the aqueous solution is boiled under pressure.

It was previously thought that isomerisation could be achieved only at high pH levels for example a pH of 10.5 and then only after boiling for a considerable period of time, for example, up to $1\frac{1}{2}$ hours. Furthermore, although it may have been appreciated that this time might be reduced by boiling under pressure, we find that such a process, carried out at high pH levels, is uncontrollable and results in degradation products such as humulinic acid. It was surprising to us that, by simultaneously reducing the pH and increasing the pressure, conditions would be provided which gave rapid and simple isomerization essentially without formation of degradation products.

This process has the significant advantage that is can be carried out without the need for the presence of unwanted inorganic salts which are inevitably present at high pH levels.

A preferred pressure is about 20—60 psi (about $1.3\times10^5$—$4\times10^5$ Pa), more preferably about 25—35 psi (about $1.3\times10^5$—$4\times10^5$ Pa), especially about 30 psi (about $2\times10^5$ Pa). At these pressures, the boiling temperature is about 120—140°C, especially about 135°C.

The boiling time may be from about 5 to 50 minutes, but is preferably about 6—15 minutes for most conditions of operation.

The alpha-acids may be present in the aqueous medium at a concentration not more than 15 grams alpha-acids per 100 ml of aqueous medium.

Conveniently, the pH of the $\alpha$-acids-containing aqueous phase produced by an $\alpha$-acids extraction process embodying the invention as described above is from about 7—8 and therefore, after separation of the aqueous phase from the organic phase, this aqueous phase may be subjected directly to an isomerisation process embodying the invention without the need for adjustment of pH and without the need to load the solution with unwanted inorganic salts.

Although the abovementioned isomerisation process can be carried out with some success on an $\alpha$-acids extract obtained by conventional processes, for example, those obtained by solvent extraction processes, a preferred, solvent-free, isomerisation, procedure embodying the invention includes both of the abovementioned respective $\alpha$-acids extraction and isomerisation processes.

Such a preferred process may be carried out as follows.

The starting material is a typical relatively crude hop extract obtained from hops by extraction with liquid or supercritical carbon dioxide. The preparation of such a crude hop extract is described in GB 1575827. Typically, dry hops are treated with liquid $CO_2$, preferably at a pressure of from about 40 to 60 atm (about $4\times10^5$ to $6\times10^5$ Pa), especially about 50 atm (about $5\times10^5$ Pa) and a temperature of from about 3—10°C, especially about 7°C to provide a solution of the crude extract in the liquid $CO_2$. The $CO_2$ may be separated off by evaporation. Such a crude extract contains, in addition to $\alpha$-acids, various ingredients such as hop oil, fats and waxes, various uncharacterised resins and $\beta$-acids. It should not, however, contain appreciable amounts of, for example, tannins, hard resins and chlorophyll.

The first stage in this extraction/isomerisation process embodying the invention consists of extraction of essentially unisomerised $\alpha$-acids from the crude liquid $CO_2$ hop extract.

The hop extract is boiled, more preferably refluxed, with an aqueous alkaline solution, a potassium carbonate or bicarbonate solution being especially preferred. A particularly preferred aqueous alkali concentration is about 0.02—1M, more preferably about 0.06—0.08M, especially about 0.07M, and a particularly preferred $\alpha$-acids concentration lies within the range of about 2—30 vol% calculated as described hereinafter. As mentioned above, a preferred equivalent ratio of $K_2CO_3/\alpha$-acids is about

4

0.4/1—0.8/1, more preferably about 0.5/1—0.75/1, especially about 0.6/1. This provides the starting mixture with an initial pH of about 9—11.

Boiling may be carried out for a time from about 15 minutes to 1 hour, preferably for about 40 minutes. During this process, a small amount of iso-α-acids is formed in the aqueous phase and care must be taken not to conduct the process for too long or at too high an alkali concentration so as to avoid precipitation of an unwanted solid phase containing such iso-α-acids, and/or breakdown of the α-acids with consequent loss of purity.

The above extraction process provides (i) an aqueous alkaline layer containing up to 100%, typically about 95%, of the α-acids in the original crude hop extract (though as mentioned above a small amount of this is present as iso-α-acids), and (ii) an organic layer containing β-acids and the other ingredients of the crude hop extract mentioned above apart from the hop oils which may be removed by steam vaporisation during the process if desired.

This mixture is preferably cooled to between about 40—80°C before the organic layer is separated off by a conventional method of separating immiscible layers, for example, using a separating funnel. This separation constitutes the second stage in the preferred process, and yields the abovementioned aqueous α-acids-containing layer for providing the iso-α-acids, and the organic β-acids containing layer from which the β-acids may be extracted for oxidation.

The final pH of the aqueous phase containing the mainly unisomerised α-acids formed by the abovementioned extraction step lies in the range of from about 7.0—8.5, preferably about 7—8, especially about 7.5. No adjustment of pH is then necessary before carrying out the subsequent isomerisation step. Hence it is not necessary to load the solution with unwanted inorganic salts which are present when operating at conventional pH levels of about 10.5.

The third stage consists of directly isomerising the α-acids in this aqueous phase.

·The aqueous phase containing the α-acids is boiled under pressure, preferably under a pressure of about 30 psi (about $2 \times 10^5$ pa), at which pressure the boiling temperature will be about 130°C.

A typical boiling time is around 6 minutes as compared with conventional isomerisation processes which can take up to $1\frac{1}{2}$ hours.

Under such weakly alkaline conditions essentially all of the α-acids content is simply, quickly and efficiently converted to iso-α-acids.

It is preferred that the amount of hop extract treated in extraction stage 1 above is such that the α-acids concentration in the aqueous phase subjected to this isomerisation stage 3 is not too high, more preferably not above about 15%, since otherwise longer times and/or higher pressures are required in stage 3. Alternatively the aqueous phase obtained after stage 2 may be diluted.

A typical aqueous solution obtained by stage 3 is slightly hazy in appearance and the final stage in the preferred process is to chill, preferably at an iso-α-acids concentration of less than about 15% (to avoid loss of iso-α-acids by precipitation), filter and concentrate under vacuum to obtain a product suitable for use.

Where the resultant product has a haze value less than about 5 EBC units, as later described, it is suitable for addition directly to a beer after the brewer's final filtration stage. Products having a haze above this value, although suitable for use by the brewer, should be added prior to the final filtration.

The absence of high levels of inorganic salts from the aqueous iso-α-acids solution renders this concentration step particularly simple and efficient because the tendency for the iso-α-acids to "salt out" is minimised.

If desired, the β-acids may be extracted from the organic layer obtained in the second stage by treatment of the organic layer, conveniently with an alkali solution, usually an aqueous alkali. Since the β-acids thus extracted are essentially free from α-acids, they may be easily and efficiently oxidised to produce oxidised β-acids also useful as bittering agents in the brewing industry.

Description of the preferred embodiments

Especially preferred solvent-free extraction and isomerisation processes embodying the invention, together with less preferred conditions (for the guidance of the reader) will now be described with reference to the following Examples.

Determination of various parameters referred to in these Examples was as follows:—

(i)    Equivalent ratios calculated from:
Average molecular weight of α-acids=360
Molecular weight of alkali, e.g., $K_2CO_3$=138.

(ii)    Weight of oils collected (g) =0.8×volume of oil collected (mls).

(iii)    % α-Acid concentration (W/V) in starting mixture:
The amount by weight (g) of α-acids in a sample of hop extract was determined by a conventional LCV method (which involves titration against lead acetate to obtain a conductance curve). Confirmation of the value, to within 0.5%, was obtained by optical rotation value measurement.

The "% α-acids concentration" values merely indicate the amount of water added to a hop extract sample as compared with the amount of α-acids present in the sample. For example, a "5% α-acids concentration" means that 20 times as much water has been added.

(iv)     % α-acids recovery (stage 1)

$$= \frac{\text{wt of hop extract--wt of (top, organic layer+hop oils)}}{\text{wt of α-acids in hop extract}} \times 100$$

Where the stated % α-acids recovery values are greater than 100%, this is because of the presence of small amounts of β-acids in the aqueous layer.

Where, in the Tables, "β" appears, this indicates that the aqueous phase contains more than 5% β-acids, such processes being less preferred.

Where the stated % α-acids recovery values are 100% or less, then only α-acids were present in the aqueous phase; it was confirmed by high performance liquid chromatography (HPLC) that essentially none of the β-acids component was present.

(v)     % purity of iso-α-acids

$$= \frac{\text{concentration of iso-α-acids in aqueous solution (final product) (% W/W)}}{\text{concentration of total resins in aqueous solution (final product) (% W/W)}} \times 100$$

The concentration of iso-α-acids in the final product was measured as described in "Analytica EBC", 3rd Edition, 1975, Method 7.5, E60, modified to take into account the absence, from the final product, of interfering substances found in beer (to which this test is conventionally directed).

The concentration of total resins in the final product was measured by rendering the solution acidic, extracting the resins into hexane, evaporating and weighing the residue.

(vi)     % yield of iso-α-acids

$$= \frac{\text{wt of iso-α-acids in final product}}{\text{wt of α-acids in hop extract}} \times 100$$

(vii)     Haze values are measured using a nephelometer, which provides European Brewing Convention (EBC) values.

Example 1
Preliminary stage—Preparation of crude hop extract

Liquid $CO_2$ hop extracts used in the processes embodying the invention described below were obtained as follows.

A commercial hops (as indicated) was formed into pellets, cooled to remove the heat generated during the pelletizing process and again milled to produce a dry powder.

The powder was placed in an extractor vessel through which liquid $CO_2$ was passed upwardly at a pressure of about 50 atm ($5 \times 10^5$ Pa) and a temperature of about 7°C.

The resultant solution of the crude hop extract in the liquid $CO_2$ was allowed to issue from an upper region of the vessel to a condenser/evaporator, where the solution was heated and the liquid $CO_2$ allowed to evaporate off to provide the crude hop extract used as a starting material in the processes described below.

Stages 1 and 2—Extraction and separation

Calculated amounts of (a) α-acids present in a hop extract, (b) alkali and (c) water were refluxed for given times, the hop oils being collected in a cohobation head. Experiments were conducted using an extract obtained by liquid $CO_2$ extraction of the commercial hops "Bullion" (our Batch No. 366) and using varying amounts of hop extracts so as to give varying α-acids concentrations and also varying base/α-acids equivalent ratios. The process conditions were as indicated in Table 1. On completion of the reflux time the mixture was cooled to about 80°C, poured into a separating funnel and allowed to stand. The mixture separated into a top, organic, layer and a bottom, aqueous, layer. The bottom, aqueous, layer was run off, leaving the top, organic, layer which was also removed, and then weighed. The bottom, aqueous, layer was used in stage 3 described below. Table 2 shows results of the above and experiments conducted at an α-acids concentration of 5% for different base/α-acids equivalent ratios. Similarly, Tables 3 and 4 show results for respective α-acids concentrations of 15% and 2% including the use of other bases and hop extracts.

6

TABLE 1

| Run No. | % α-Acids concentration (W/V) in starting mixture | Equiv. ratio $K_2CO_3$/α-acids in starting mixture | % α-Acids recovery | pH of Aq. phase of product of stage 1 | Time (mins) |
|---|---|---|---|---|---|
| CP4/115 | 2 | 1.0 | β | — | 30 |
|  |  | 1.0 | β | — | 30 |
| CP4/117 | 2 | 0.6 | 100 | 7.2 | 30 |
| CP4/118 | 2 | 0.6 | β | 7.2 | 30 |
| CP4/120 | 2 | 0.4 | 90.0 | 7.6 | 30 |
| CP4/119 | 2 | 0.4 | 76.6 | 7.6 | 30 |
| CP4/079 | 5 | 0.75 | β | — | — |
| CP4/102 | 5 | 0.60 | 100.0 | 8.0 | — |
| CP4/094 | 5 | 0.50 | 80.0 | 7.5 | — |
| CP4/114 | 5 | 0.40 | 73.3 | — | 40 |
| CP4/121* | 7.5 | 1.0 | β | 9.4 | 40 |
| CP4/122 | 7.5 | 0.6 | 97.8 | 7.8 | 40 |
| CP4/123 | 10 | 0.6 | 100 | 7.7 | 40 |
| CP4/124 | 15 | 0.6 | 105.2 | 7.9 | 40 |
| CP4/125 | 20 | 0.6 | 104.3 | 7.7 | 45 |
| CP4/127 | 20 | 0.6 | 104.2 | 8.0 | 45 |
| CP4/128 | 30 | 0.6 | β | 8.0 | 60 |

* This run gave an aqueous solution containing, in addition to the α-acids, too high an amount of β-acids for use in stage 3.

EP 0 173 479 B1

TABLE 2
(5% α-Acids solution)

| Equivalent ratio K₂CO₃/ α-acids | Hop extract wt (g) | Wt. α-acids (g) | Wt. top layer (g) | Mls oil collected by vaporization | % α-Acids recovery |
|---|---|---|---|---|---|
| 2.0 | 100 | 40 | 26.0 | 2.0 | β |
| 1.0 | 50 | 20 | — | — | β |
| 0.5 | 50 | 20 | 32.2 | — | 89.0 |
| 0.5 | 50 | 20 | 31.7 | — | 91.5 |
| 0.5 | 50 | 20 | 30.9 | 2.9 | 83.9 |
| 0.75 | 50 | 20 | 24.0 | — | β |
| 0.5 | 50 | 20 | 31.2 | — | 94.0 |
| 0.5 | 50 | 20 | 32.1 | 2.7 | 78.7 |
| 0.5 | 100 | 40 | 64.3 | 3.4 | 82.4 |
| 0.5 | 100 | 40 | 71.6 | 3.4 | 64.2 |
| 0.6 | 100 | 40 | 55.9 | 3.6 | 103.0 |
| 0.5 | 100 | 40 | 64.1 | 3.2 | 83.3 |
| 0.6 | 100 | 40 | 55.3 | 3.6 | 104.5 |
| 0.6 | 100 | 40 | 57.4 | 3.0 | 100.5 |
| 0.6 | 100 | 40 | 56.6 | 3.0 | 102.5 |
| 0.6 | 100 | 40 | 56.8 | 3.4 | 101.2 |
| 0.6 | 200 | 80 | 112.9 | 5.0 | 103.8 |
| 0.6 | 200 | 80 | 114.0 | 6.6 | 100.9 |
| 0.6 | 203 | 81.2 | 116.0 | 5.8 | 101.4 |
| 0.6 | 200 | 80 | 109.2 | 7.0 | 106.0 |
| 0.6 | 200 | 80 | 112.7 | 6.0 | 103.0 |
| 0.6 | 200 | 80 | 112.8 | 7.0 | 102.0 |
| 0.4 | 100 | 40 | 68.1 | 3.2 | 73.3 |

8

TABLE 3
15% α-Acids soln.

| Equivalent ratio alkali/α-acids | % α-Acids recovery | Source of crude extract[1]/alkali |
|---|---|---|
| 0.6 | 105.2 | Bullion 366/$K_2CO_3$ |
| 0.78 | β | Bullion 366/$Na_2CO_3$ |
| 0.6 | β | Target 338/$K_2CO_3$ |
| 0.6 | 82.9 | Bullion 366/$Na_2CO_3$ |
| 0.6 | β | Bullion 341/$K_2CO_3$ |
| 0.5 | 99.0 | Bullion 341/$K_2CO_3$ |
| 0.5 | 83.3 | Bullion 123/$K_2CO_3$ |
| 0.6 | 83.8 | Bullion 366/$Na_2CO_3$ |
| 0.75 | β | Bullion 366/NaOH |
| 0.25 | 26.9 | Bullion 366/NaOH |
| 0.25 | 30.4 | Bullion 366/KOH |
| 0.6 | 95.5 | Bullion 366/KOH |

[1] The name, e.g. "Bullion", represents a commercial hops and the number, e.g. "366" represents our Batch No. for the crude extract used as starting material for Stage 1.
Registered trademarks are acknowledged as such.

TABLE 4
2% α-Acids soln.

| Equivalent ratio $K_2CO_3$/α-acids | % α-Acids recovery | Crude extract |
|---|---|---|
| 1.0 | β | Bullion 366 |
| 0.6 | 101 | Bullion 366 |
| 0.4 | 76.6 | Bullion 366 |
| 0.4 | 90.0 | Bullion 366 |

From the above results it can be seen that quantitative extraction of α-acids is possible if the equivalent ratio of base/α-acids is adjusted to ensure that no β-acids are extracted and that maximum yield is obtained. By experiment using $K_2CO_3$, an equivalent ratio of 0.6/1 was found to be the optimum for some resins; higher ratios may result in extraction of some β-acids while for other resins a ratio of 0.5/1 was found to be the optimum. Lower ratios resulted in loss of yield in both cases. This variation seems to be due to different amounts of acidic substances present in different batches of hop extracts.

Although not wishing to be bound by theory, it is believed that the particularly efficient separation of the α-acids and β-acids into the respective aqueous and organic phases occurs because of the competition between the α-acids and β-acids for the available alkali; the alkali prefers to react with the more acidic α-acids, rather than with the less acidic β-acids, to form water-soluble α-acids salts, leaving the β-acids essentially in their free, water-insoluble, state.

The effect of α-acids concentration did not at first seem to have any effect on extraction, but it was found that at high concentration (30%) uncharacterised resins were extracted. This is clearly shown when purities of the final products are studied. At lower concentrations (<15%) no uncharacterised resins were present. Another disadvantage appears at higher concentrations (>15%); on chilling larger losses occur than for the more dilute solutions.

Use of NaOH and KOH is possible in which case a 0.6/1 equivalent ratio (1.2/1 molar ratio) seems to be the optimum.

When corresponding tests were carried out using sodium and potassium carbonate respectively, potassium carbonate tended to give better yields. This is possibly because the potassium salts of the α-acids are more soluble than the sodium salts.

In this first extraction stage some isomerisation does occur. Iso-α-acids are known to be monobasic. This therefore affords possible explanation as to why relatively small amounts of $K_2CO_3$ give quantitative extraction. Once *some* of the α-acids have been isomerised, thus releasing more $K^+$ ions, these "excess" $K^+$ ions extract the remaining α-acids, but conditions now are such that no further isomerisation takes place.

The mixture obtained by stage 1 consists of two phases, a top, organic layer and a bottom, aqueous layer. In stage 2, as described above, these layers are separated from one another.

Stage 3—Isomerisation

The aqueous phase from stage 2 was then charged into a pressure reactor and the pressure increased by increasing temperature. Table 5 shows times for completion of reaction at given pressures and α-acids concentrations in the aqueous phase obtained from stage 2 (Run Nos. in Table 5 correspond with those of Table 1). The α-acids concentrations given are those before extraction stage 1 was carried out, but since α-acids recovery values for stage 1 were high, these give an approximate indication of α-acids concentration in the aqueous phase obtained from stage 2.

TABLE 5

| Run No. | Pressure P.S.I. | (Pa×10⁵) | Alkali | Time min | α-Acids concentration |
|---|---|---|---|---|---|
| CP4/102 | 30—35 | (2.1—2.4) | $K_2CO_3$ | 6 | 5.0 |
| CP4/106 | 30 | (2.1) | " | 15 | 5.0 |
| CP4/107 | 30—40 | (2.1—2.8) | " | ∾15 | 5.0 |
| CP4/116 | 30—35 | (2.1—2.4) | " | 6 | 5.0 |
| CP4/118 | 30—35 | (2.1—2.4) | " | 6 | 2.0 |
| CP4/120 | 30—38 | (2.1—2.6) | " | 10 | 2.0 |
| CP4/122 | 30—35 | (2.1—2.4) | " | 6 | 7.5 |
| CP4/123 | 30—38 | (2.1—2.6) | " | 6 | 10 |
| CP4/124 | 30—38 | (2.1—2.6) | " | 7 | 15 |
| CP4/125 | 30—40 | (2.1—2.8) | " | 40 | 20 |
| ·CP4/127 | 60—67 | (4.1—4.6) | " | 6 | 20 |
| CP4/128 | 60—67 | (4.1—4.6) | " | 6 | 30 |
| CP4/133 | 30—35 | (2.1—2.4) | " | 10 | 5.0 |
| CP4/142 | 30—38 | (2.1—2.6) | KOH | 14 | 15.0 |

As can be seen from Table 5 the reaction went to completion within minutes once a pressure of about 30 psi was reached at α-acids concentrations of 15% or less. At higher concentration either longer times were required or higher pressures. Products obtained from isomerising for longer times were inferior in haze characteristics. From this, it can be seen that, if solutions containing high α-acids concentrations are to be isomerised then pressures should be increased to about 60 psi whereby the reaction goes to completion in 6 minutes and a highly satisfactory product is obtained.

At these higher pressures, hence higher temperatures, the necessary energy required to overcome the activator energy "hump" for the reaction is readily achieved. In conventional isomerisation procedures this is overcome by making use of higher quantities of base. The excess base has then got to be removed by further processing. Isomerising under pressure means that low levels of base can be used throughout the process. This eliminates extra stages in the process. Another advantage of isomerising under pressure is the control afforded once the reaction is completed. Cooling gives a rapid drop in pressure and hence a fast quenching of the reaction. In conventional refluxing procedures for isomerising, it takes longer to quench the reaction and so the possibilities of further reactions such as iso-α-acids to humulinic acids are increased.

Stage 4—Filtration/concentration

The solution from stage 3 was cooled rapidly to quench the reaction and further chilled in a refrigerator to about 8°C.

Chilling of the isomerised solution results in cloudiness for dilute solutions (<15%) and precipitation of resins for concentrated solutions (>15%). On analysis of resin precipitated out of concentrated solutions it was found to consist mainly of iso-α-acids; hence a loss in yield. In dilute solutions very small quantities of resins precipitate out, which on analysis were shown to consist mainly of β-acids, the β-acids having been extracted in trace quantities in stage 1. These chilled solutions were then filtered through kieselguhr, giving a bright filtrate which was then concentrated to the required specification. Again due to low levels of base the solutions could be concentrated up to about 45% iso-α-acids without "salting out" occurring.

The final products obtained by the Runs listed in Table 5 were analysed for various parameters as shown in Table 6.

TABLE 6

| Run No. | % α-Acids concn. in aqueous solution from stage 3 | Equivalent ratio | Concn. of iso-α-acids wt/wt to which solution is adjusted after completion of isomerisation | Total resins wt/wt (%) | Purity of iso-α-acids % | 1% Solution | | Yield of iso-α-acids % |
|---|---|---|---|---|---|---|---|---|
| | | | | | | pH of Concentrated iso-α-acids solution | Haze units EBC | |
| CP4/102 | 5.0 | 0.6 | 21.8 | 23.28 | 93.7 | 7.6 | 1.6 | 84.0 |
| CP4/106 | 5.0 | 0.6 | 25.6 | 24.80 | 103.2 | 7.0 | 5.5 | 84.1 |
| CP4/107 | 5.0 | 0.6 | 21.5 | 22.40 | 95.9 | 7.2 | 8.0 | 80.8 |
| CP4/116 | 5.0 | 0.4 | 17.6 | 18.70 | 94.1 | 6.5 | 2.1 | 53.4 |
| CP4/118 | 2.0 | 0.6 | 16.7 | 17.90 | 93.0 | 6.9 | 6.5 | 86.3 |
| CP4/120 | 2.0 | 0.4 | 27.6 | 27.40 | 100.0 | 6.4 | 6.0 | 45.4 |
| CP4/122 | 7.5 | 0.6 | 34.0 | 35.00 | 97.0 | 7.1 | 5.5 | 77.2 |
| CP4/123 | 10.0 | 0.6 | 38.4 | 40.73 | 94.3 | 7.7 | 8.0 | 76.0 |
| CP4/124 | 15.0 | 0.6 | 35.4 | 35.49 | 99.7 | 7.8 | 11.5 | 68.1 |
| CP4/125 | 20.0 | 0.6 | 13.9 | 15.52 | 89.5 | 7.2 | 62.5 | 74.8 |
| CP4/127 | 20.0 | 0.6 | 13.7 | 15.25 | 89.8 | 8.9 | 1.6 | 73.8 |
| CP4/128 | 30.0 | 0.6 | 17.6 | 19.52 | 90.2 | 8.7 | 4.2 | 71.4 |
| CP4/133 | 5.0 | 0.5 | 16.33 | 16.46 | 99.2 | 7.4 | 2.0 | 80.8 |
| CP4/142 | 15 | 1.2 | 31.17 | 32.3 | 96.7 | 7.5 | 8.7 | 67.7 |

EP 0 173 479 B1

Examples 2—14

These Examples were carried out in essentially the same manner as that described in Example 1, except where stated.

In each case, the aqueous layer containing α-acids produced by stage 1 had a pH between 7.5—8.5. The various parameters were as defined and calculated with reference to Example 1.

Example 2

0.6/1 equivalent ratio of alkali/α-acids at 5% W/V α-acids concentration.

A crude liquid $CO_2$ extract of hops (from the Bullion hops variety, weighing 200 gms, and containing 40% α-acids as determined by LCV) was added to a stirred solution of potassium carbonate (18.4 gms in 1600 mls deionised water). This mixture was refluxed for 30 mins, the steam volatile hop oils being collected in a cohobation head (6.6 mls collected). The mixture was then transferred into a separating funnel while still hot and the two phases separated off. The upper, organic, layer, containing mainly the β-acids, amounted to 114 gms.

The lower, aqueous, phase, containing mainly the α-acids, was separated from the upper layer and transferred to a pressure reactor. The α-acids were then subjected to boiling at about 135°C for 6 mins under a pressure which was initially about 30 psi ($2.1 \times 10^5$ Pa), but rose to about 40 psi ($2.8 \times 10^5$ Pa) during the reaction. This resulted in complete isomerisation to iso-α-acids. The reaction mixture was quenched rapidly by reduction of pressure and cooled.

The cooled iso-α-acids solution was then chilled by refrigeration, filtered through kieselguhr and concentrated up under vacuum to give a pale yellow isomerised extract (308.5 gms).

The product was analysed, as previously described, to provide the following results:—

| | |
|---|---|
| Concentration of iso-α-acids | 21.8% w/w |
| Concentration of total resins | 23.3% w/w |
| % Purity | 93.7% |
| Overall yield | 84.0% |
| pH of 1% Solution | 7.6 |
| Haze value of 1% solution | 1.6 EBC units |

Example 3

0.6/1 equivalent ratio of alkali/α-acids at 5% W/V α-acids concentration.

A crude liquid $CO_2$ hop extract resin (200 gms) of the type used in Example 2 was added to a stirred solution of potassium carbonate (18.4 gms in 1600 mls water). The mixture was refluxed (30 min), steam volatile oils being collected in a cohobation head (7.0 mls collected), and finally transferred into a separating funnel. The lower, aqueous, phase was removed for further processing, leaving an upper, organic, phase amounting to 112.8 gms. The aqueous phase was boiled at 40 psi ($2.8 \times 10^5$ Pa) pressure for 6 mins, cooled, chilled and filtered through kieselguhr followed by concentration under vacuum, to give a final product (301 gms).

| | |
|---|---|
| Product analysis: | |
| Concentration of iso-α-acids | 21.5% w/w |
| Concentration of total resins | 22.4% w/w |
| % Purity | 95.9% |
| Overall yield | 80.8% |
| pH of 1% Solution | 7.2 |
| Haze value of 1% solution | 8.0 EBC units |

The use of a higher pressure in the isomerisation stage than that of Example 2 led to a lower amount of residual α-acids. The amount of residual α-acids was double-checked by HPLC.

Example 4

0.4/1 equivalent ratio of alkali/α-acids at 5% W/V α-acids concentration.

A crude liquid $CO_2$ hop extract resin (200 gms) of the type used in Example 2 was added to a solution of potassium carbonate (12.26 gm in 1600 ml water). The mixture was refluxed with stirring for 40 mins, the steam volatile oils being collected in a cohobation head (oils collected—6.0 mls). The mixture was transferred to a separating funnel. The top, organic, layer amounted to 136.8 gms and the bottom, aqueous, layer was removed and boiled at 30—35 psi ($2.1 \times 10^5$—$2.4 \times 10^5$ Pa) for 6 mins, cooled, chilled, filtered through kieselguhr and concentrated up to give a final product (243 gms).

Product analysis:—

| | |
|---|---|
| Concentration of iso-α-acids | 17.6% w/w |
| Concentration of total resins | 18.7% w/w |
| % Purity | 94.1% |
| Overall yield | 53.4% |
| pH of 1% Solution | 6.5 |
| Haze value of 1% solution | 2.12 EBC units |

The use of a lower equivalent ratio of base/α-acids in the α-acids extraction process than that of Example 2 resulted in a loss in overall yield of iso-α-acids.

Example 5

0.6/1 equivalent ratio of alkali/α-acids at 7.5% W/V α-acids concentration.

A crude liquid $CO_2$ hop extract resin (300 gms) of the type used in Example 2 was added to a solution of potassium carbonate (27.6 gms in 1600 ml water). The mixture was refluxed for 40 min with stirring, the steam volatile hop oils being collected in a cohobation head (10.7 mls collected). The mixture was finally transferred to a separating funnel and the aqueous, bottom, layer removed for further processing. The top, organic, layer amounted to 174.0 gms. The aqueous phase was boiled at 30—35 psi ($2.1 \times 10^5$ Pa) for 6 mins, chilled to 1°C, filtered through kieselguhr and concentrated up to give 272.5 gm isomerised extract.

Product analysis:

| | |
|---|---|
| Concentration of iso-α-acids | 34.0% w/w |
| Concentration of total resins | 35.0% w/w |
| % Purity | 97.0% |
| Overall yield | 77.2% |
| pH of 1% Solution | 7.1 |
| Haze value of 1% solution | 5.5 EBC units |

Example 6

0.6/1 equivalent ratio of alkali/α-acids at 10% W/V α-acids concentration.

A crude liquid $CO_2$ hop extract (400 gms) of the type used in Example 2 was added to a stirred solution of potassium carbonate (36.8 gms in 1600 mls water) and refluxed for 40 mins, the steam volatile oils being collected in a cohobation head (12.5 mls collected). The mixture was then transferred to a separating funnel and the bottom, aqueous, phase removed for further processing. The top, organic, layer amounted to 228.6 gms. The bottom, aqueous, phase (pH 7.7) was boiled at 30—38 psi ($2.1 \times 10^5$—$2.6 \times 10^5$ Pa) for 6 mins, cooled, chilled and filtered through kieselguhr and finally concentrated under vacuum to give 316.8 gms of an isomerised extract.

Product analysis:—

| | |
|---|---|
| Concentration of iso-α-acids | 38.4% w/w |
| Concentration of total resins | 40.73% w/w |
| % Purity | 94.3% |
| Overall yield | 76.0% |
| pH of 1% Solution | 7.7 |
| Haze value of 1% solution | 8 EBC units |

Example 7

0.6/1 equivalent ratio of alkali/α-acids at 15% W/V α-acids concentration.

A crude liquid $CO_2$ hop extract (600 gms) of the type used in Example 2 was added to a stirred solution of potassium carbonate (55.2 gms in 1600 mls water). The mixture was refluxed for 40 mins, the steam volatile oils being collected in a cohobation head (19.0 mls collected). The mixture was then transferred to a separating funnel and the bottom, aqueous, layer removed. The top, organic, phase amount to 332.2 gms while the bottom, aqueous, phase (pH 7.9) was boiled at 30—38 psi ($2.1 \times 10^5$—$2.6 \times 10^5$ Pa) for 7 mins, cooled, chilled, filtered (kieselguhr) and concentrated under vacuum to give an isomerised extract (462.2 gms).

Product analysis:—

| | |
|---|---|
| Concentration of iso-α-acids | 35.4% w/w |
| Concentration of total resins | 35.49% w/w |
| % Purity | 99.7% |
| Overall yield | 68.1% |
| pH of 1% Solution | 7.8 |
| Haze value of 1% solution | 11.5 EBC units |

14

Example 8

0.6/1 equivalent ratio of alkali/α-acids at 20% W/V α-acids concentration.

A crude liquid $CO_2$ hop extract resin (800 gms) of the type used in Example 2 was added to a stirred solution of potassium carbonate (73.6 gms in 1600 mls water). The mixture was refluxed for 45 mins, the steam volatile oils being collected in a cohobation head (20 mls collected). The mixture was transferred to a separating funnel. The upper, organic, phase amounted to 450.0. The lower, aqueous, phase (pH 7.7) was boiled at 30—40 psi $(2.1×10^5—2.8×10^5$ Pa) for 40 mins. The resulting iso-α-acids solution was cooled and filtered to give a product that was not concentrated up (1722 gms).

Product analysis:

| | |
|---|---|
| Concentration of iso-α-acids | 13.9% w/w |
| Concentration of total resins | 15.52% w/w |
| % Purity | 89.5% |
| Overall yield | 74.8% |
| pH of 1% Solution | 7.2 |
| Haze value of 1% solution | 62.5 EBC units |

For a given isomerisation pressure, solutions of α-acids containing higher concentrations require a longer isomerisation time and give products having higher haze values (but compare Example 9, where a higher pressure is employed).

The longer isomerisation time of 40 mins required in this Example still compares favourably with the period of about 1½ hours required for conventional isomerisation processes.

Example 9

0.6/1 equivalent ratio of alkali/α-acids at 20% W/V α-acids concentration.

A crude liquid $CO_2$ hop extract resin (800 gms) of the type used in Example 2 was added to a stirred solution of potassium carbonate (73.6 gms in 1600 mls water). The mixture was refluxed for 45 mins, the oils being collected in a cohobation head (22.0 mls collected). The mixture was transferred to a separating funnel. The upper, organic, layer amounted to 449.1 gms. The lower, aqueous, phase (pH 8.0) was boiled at 60—67 psi $(4.1×10^5—4.6×10^5$ Pa) for 6 mins. The resulting iso-α-acids solution was cooled and filtered to give a product that was not concentrated up (1725 gms).

Product analysis:—

| | |
|---|---|
| Concentration of iso-α-acids | 13.7% w/w |
| Concentration of total resins | 15.25% w/w |
| % Purity | 89.8% |
| Overall yield | 73.8% |
| pH of 1% Solution | 8.9 |
| Haze value of 1% solution | 1.6 EBC units |

At higher α-acids concentrations, higher pressures but lower times gave a product low in haze characteristics.

Example 10

0.6/1 equivalent ratio of alkali/α-acids at 30% W/V α-acids concentration.

A crude liquid $CO_2$ hop extract (1200 gms) of the type used in Example 2 was added to a stirred solution of potassium carbonate (110.3 gms in 1600 mls water). The mixture was refluxed for 1 hour, the steam volatile oils being collected (31.5 mls). The mixture was then separated off, the top, organic, layer weighed (634.1 gms), and the bottom, aqueous, phase (pH 8.0) boiled at 60—67 psi $(4.1×10^5—4.6×10^5$ Pa) for 6 mins. The resulting iso-α-acids solution was then cooled, chilled and filtered but not concentrated to give an isomerised extract (1583 gms).

Product analysis:—

| | |
|---|---|
| Concentration of iso-α-acids | 17.6% w/w |
| Concentration of total resins | 19.52% |
| % Purity | 90.2% |
| Overall yield | 71.4% |
| pH of 1% Solution | 8.7 |
| Haze value of 1% solution | 4.2 EBC units |

Example 11

0.5/1 equivalent ratio of alkali/α-acids at 5% W/V α-acids concentration.

A crude liquid $CO_2$ hop extract (from the Target hops Variety, weighing 147.3 gms, and containing 54.3% α-acids as determined by LCV) was added to a stirred solution of potassium carbonate (15.3 gms in 1600 mls water) and refluxed for 40 mins. The steam volatile oils were collected (6.7 mls) and the reflux

15

mixture transferred to a separating funnel. The upper, organic, layer amounted to 61.6 gms. The bottom, aqueous, layer (pH 7.6) was boiled at 30—35 psi ($2.1\times10^5$—$2.4\times10^5$ Pa) for 10 minutes. The resultant iso-α-acids solution was cooled, chilled and filtered (through kieselguhr) and concentrated up to 396.2 gms.

Product analysis:—

| | |
|---|---|
| Concentration of iso-α-acids | 16.33% w/w |
| Concentration of total resins | 16.46% w/w |
| % Purity | 99.2% |
| Overall yield | 80.8% |
| pH of 1% Solution | 7.4 |
| Haze value of 1% solution | 2.0 EBC units |

Example 12

0.6/1 equivalent ratio of alkali/α-acids at 15% W/V α-acids concentration.

A crude liquid $CO_2$ hop extract (600 gms) of the type used in Example 2 was added to a stirred solution of sodium carbonate (42.4 gms in 1600 mls water) and refluxed for 40 mins. The steam volatile oils were collected and amounted to 14.0 mls. The reflux mixture was finally transferred to a separating funnel. The upper, organic, phase (389.8 gms) was removed and the bottom aqueous phase (pH 7.6) was boiled at 30—35 psi ($2.1\times10^5$—$2.4\times10^5$ Pa) for 7 mins. The resultant iso-α-acids solution was then chilled, filtered and concentrated up. An organic phase separated out due to "salting out". This would not redissolve in water indicating the lower solubility of the sodium salt of the iso-α-acids. The aqueous phase after concentration had the following analysis:—

| | |
|---|---|
| Concentration of iso-α-acids | 9.7% w/w |
| Concentration of total resins | 9.8% w/w |
| % Purity | 98.9% |
| pH of 1% Solution | 7.2 |
| Haze value of 1% solution | 1.4 EBC units |

The yield of iso-α-acids was difficult to measure because of the abovementioned salting out and was not recorded.

Example 13

1.2/1 Molar (0.6/1 equivalent) ratio of alkali/α-acids at 15% W/V α-acids concentration.

A crude liquid $CO_2$ hop extract (600 gms) of the type used in Example 2 was added to a stirred solution of potassium hydroxide (44.9 gms in 1600 mls water) and refluxed for 40 mins. The steam volatile oils were collected and amounted to 15.5 mls. The reflux mixture was finally transferred to a separating funnel. The upper, organic, phase amounted to 358.5 gms. The bottom, aqueous, phase (pH 8.1) was boiled at 30—38 psi ($2.1\times10^5$—$2.6\times10^5$ Pa) for 14 mins. The cooled, chilled solution was then filtered (through kieselguhr) and concentrated to give a final product (521.5 gms).

Product analysis:—

| | |
|---|---|
| Concentration of iso-α-acids | 31.17% w/w |
| Concentration of total resins | 32.23% w/w |
| % Purity | 96.7% |
| Overall yield | 72.0% |
| pH of 1% Solution | 7.5 |
| Haze value of 1% solution | 8.7 EBC units |

Example 14 (best method)

1/1 Molar (0.5/1 equivalent) ratio of alkali/α-acids at 15% W/V α-acids concentration.

A crude liquid $CO_2$ hop extract (from the Target hops Variety, weighing 400 gms and containing 43.1% α-acids as determined by LCV) was added to a stirred solution of potassium bicarbonate (47.8 gms in 1149 mls water) and refluxed for 1 hour. The steam volatile oils were collected (7.6 mls) and the reflux mixture finally transferred to a separating funnel. The top, organic, layer was removed (223.7 gms). The bottom, aqueous, layer was boiled at a pressure of 30—35 psi ($2.1\times10^5$—$2.4\times10^5$ Pa) for 30 mins, cooled, filtered (through Hyflo) and concentrated up to give product (554.9 gms).

Product analysis:—

| | |
|---|---|
| Concentration of iso-α-acids | 24.2% w/w |
| Concentration of total resins | 23.8% w/w |
| % Purity | 101.6%* |
| pH of 1% Solution | 6.5 |
| Haze value of 1% solution | 7.2 EBC units |

* This value represented about 100% purity within the limits of experimental error, and this Example shows the excellent purity achievable using potassium bicarbonate.

As can be seen from the above, processes embodying the invention allow a particularly simple and efficient extraction and isomerisation of α-acids from crude hop extracts. No use of organic solvent need be made. The process employs only low concentrations of alkali relative to the α-acids concentration during all stages. Indeed, it is preferred to operate also at low aqueous α-acids concentrations and low aqueous alkali concentrations throughout both the extraction and isomerisation stages.

An isomerised product of high purity that can be added to beer with no significant increase in haze can be obtained.

**Claims**

1. A process for the extraction of alpha-acids from a crude hop extract obtained by treating hops with carbon dioxide in liquid form or at a supercritical pressure, which process comprises boiling a mixture of the crude extract with an alkali, the ratio, in the mixture, of alkali to alpha-acids in the crude hop extract being no more than 2.4/n moles of alkali, where n is the valency of the alkali, to each mole of alpha-acids, to form an aqueous layer containing extracted alpha-acids and an organic layer containing beta-acids, and separating the aqueous layer and the organic layer from one another.

2. A process according to Claim 1 or Claim 2, wherein the molar ratio of alkali: alpha-acids in the crude hop extract is such as to provide an excess of alpha-acids.

3. A process according to Claim 2, wherein the ratio of alkali: alpha-acids in the crude hop extract is from 0.8/n:1 to 1.6/n:1 inclusive.

4. A process according to any preceding claim, wherein the alkali is potassium carbonate, bicarbonate or hydroxide, or sodium carbonate, bicarbonate or hydroxide.

5. A process according to any preceding claim, wherein the concentration of alkali in the said mixture of the crude hop extract and aqueous alkali is from 0.02 to 1 M inclusive.

6. A process according to any preceding claim, wherein the alpha-acids concentration in the said mixture of the crude hop extract and aqueous alkali is from 2 to 30 grams inclusive per 100 mls of aqueous alkali.

7. A process according to any preceding claim, wherein the said mixture is boiled for a period of from 15 minutes to 1 hour inclusive.

8. A process according to any preceding claim, wherein the separation of the aqueous and organic layers from one another is effected at a temperature of from 40 to 80°C inclusive.

9. A process for preparing iso-alpha-acids, which process comprises boiling an aqueous medium containing unisomerised alpha-acids in solution in the aqueous medium characterised in that the aqueous medium has a pH of from 7—8.5 inclusive and the process is carried out at a pressure above atmospheric pressure.

10. A process according to Claim 9, wherein the pressure is from $1.3 \times 10^5$ to $4 \times 10^5$ Pa inclusive.

11. A process according to Claim 9 or 10, wherein the pH is 7—8.

12. A process according to any one of Claims 9 to 11, wherein the alpha-acids concentration in the aqueous medium is not more than 15 grams alpha-acids per 100 ml of aqueous medium.

13. A process according to any one of Claims 9 to 12, which includes the additional step of increasing the concentration of the iso-alpha-acids in the resultant product by concentration thereof under reduced pressure to provide an iso-alpha-acids concentrate.

14. A process for the preparation of iso-alpha-acids from a crude hop extract, which process comprises

(i) boiling a mixture of the crude hop extract with an aqueous alkali, the ratio, in the mixture, of alkali to alpha-acids in the crude hop extract being no more than 2.4/n moles of alkali, where n is the valency of the alkali, to each mole of alpha-acids, to form an aqueous layer containing extracted alpha-acids and an organic layer containing beta-acids,

(ii) separating the aqueous and organic layers from one another,

(iii) optionally diluting the aqueous layer with an aqueous medium, and

(iv) boiling the aqueous layer at a pressure above atmospheric pressure and a pH of from 7 to 8.5 inclusive to isomerise the said extracted alpha-acids therein.

15. A process for the preparation of oxidized beta-acids from a crude hop extract, which process comprises

(i) boiling a mixture of the crude hop extract obtained by treating hops with carbon dioxide in the liquid form or at a supercritical pressure with an aqueous alkali, the ratio, in the mixture, of alkali to alpha-acids in the crude hop extract being no more than 2.4/n moles of alkali, where n is the valency of the alkali, to each mole of alpha-acids, to form an aqueous layer containing extracted alpha-acids and an organic layer containing beta-acids,

(ii) separating the aqueous and organic layers from one another, and

(iii) extracting the beta-acids from the organic layer by treatment thereof with an alkaline solution, and (iv) oxidizing the beta-acids by treating them with an oxidizing agent.

**Patentansprüche**

1. Verfahren zur Extraktion von Alphasäuren aus einem rohen Hopfenextrakt, der durch Behandlung von Hopfen mit Kohlendioxid in flüssiger Form oder bei einem superkritischen Druck erhalten wird,

EP 0 173 479 B1

welches Verfahren das Kochen einer Mischung des rohen Extraktes mit einem Alkali, wobei das Verhältnis in der Mischung von Alkali zu Alphasäuren im rohen Hopfenextrakt nicht mehr als 2,4/n Mol Alkali, worin n die Wertigkeit des Alkali bedeutet, pro Mol an Alphasäuren beträgt, um eine wässerige Schicht, die extrahierte Alphasäuren enthält und eine organische Schicht zu bilden, die Betasäuren enthält, und das Trennen der wässerigen Schicht und der organischen Schicht voneinander umfaßt.

2. Verfahren nach Anspruch 1, worin das Molverhältnis von Alkali zu Alphasäuren im rohen Hopfenextrakt so ist, daß ein Überschuß an Alphasäuren geschaffen wird.

3. Verfahren nach Anspruch 1 oder 2, worin das Verhältnis von Alkali zu Alphasäuren im rohen Hopfenextrakt 0,8/n:1 bis einschließlich 1,6/n:1 beträgt.

4. Verfahren nach einem der vorhergehenden Ansprüche, worin das Alkali Kaliumcarbonat, Kaliumbicarbonat oder Kaliumhydroxid oder Natriumcarbonat, Natriumbicarbonat oder Natriumhydroxid ist.

5. Verfahren nach einem der vorhergehenden Ansprüche, worin die Konzentration an Alkali in der genannten Mischung des rohen Hopfenextraktes und wässerigen Alkali 0,02 bis einschließlich 1 M beträgt.

6. Verfahren nach einem der vorhergehenden Ansprüche, worin die Konzentration an Alphasäuren in der genannten Mischung des rohen Hopfenextraktes und wässerigen Alkali 2 bis einschließlich 30 g pro 100 ml wässerigem Alkali beträgt.

7. Verfahren nach einem der vorhergehenden Ansprüche, worin die genannte Mischung für einen Zeitraum von 15 Minuten bis zu einer Stunde einschließlich gekocht wird.

8. Verfahren nach einem der vorhergehenden Ansprüche, worin die Trennung der wässerigen und organischen Schicht voneinander bei einer Temperatur von 40°C bis 80°C einschließlich vorgenommen wird.

9. Verfahren zur Herstellung von Isoalphasäuren, welches Verfahren das Kochen eines wässerigen Mediums erfaßt, das unisomerisierte Alphasäuren in Lösung im wässerigen Medium enthält, dadurch gekennzeichnet, daß das wässerige Medium einen pH-Wert von 7 bis 8,5 einschließlich aufweist und das Verfahren bei einem Druck über atmosphärischem Druck durchgeführt wird.

10. Verfahren nach Anspruch 9, worin der Druck $1,3 \times 10^5$ bis einschließlich $4 \times 10^5$ Pa beträgt.

11. Verfahren nach Anspruch 9 oder 10, worin der pH-Wert 7 bis 8 beträgt.

12. Verfahren nach einem der Ansprüche 9 bis 11, worin die Konzentration an Alphasäuren im wässerigen Medium nicht mehr als 15 g Alphasäuren pro 100 ml wässerigem Medium beträgt.

13. Verfahren nach einem der Ansprüche 9 bis 12, welches den zusätzlichen Schritt der Erhöhung der Konzentration an Isoalphasäuren im entstandenen Produkt durch Einengen desselben bei vermindertem Druck umfaßt, um ein Konzentrat von Isoalphasäuren zu schaffen.

14. Verfahren zur Herstellung von Isoalphasäuren aus einem rohen Hopfenextrakt, welches Verfahren umfaßt:

(i) Kochen einer Mischung des rohen Hopfenextraktes mit einem wässerigen Alkali, wobei das Verhältnis in der Mischung von Alkali zu Alphasäuren im rohen Hopfenextrakt nicht mehr als 2,4/n Mol Alkali, worin n die Wertigkeit des Alkali bedeutet, pro Mol an Alphasäuren beträgt, um eine wässerige Schicht, die extrahierte Alphasäuren enthält und eine organische Schicht zu bilden, die Betasäuren enthält,

(ii) Trennen der wässerigen und organischen Schicht voneinander,

(iii) gegebenenfalls Verdünnen der wässerigen Schicht mit einem wässerigen Medium, und

(iv) Kochen der wässerigen Schicht bei einem Druck über atmosphärischem Druck und einem pH-Wert von 7 bis 8,5 einschließlich, um die genannten extrahierten Alphasäuren darin zu isomerisieren.

15. Verfahren zur Herstellung von oxydierten Betasäuren aus einem rohen Hopfenextrakt, welches Verfahren umfaßt:

(i) Kochen einer Mischung des rohen Hopfenextraktes, der durch Behandlung von Hopfen mit Kohlendioxid in flüssiger Form oder bei einem superkritischen Druck erhalten wird, mit einem wässerigen Alkali, wobei das Verhältnis in der Mischung von Alkali zu Alphasäuren im rohen Hopfenextrakt nicht mehr als 2,4/n Mol Alkali, worin n die Wertigkeit des Alkali bedeutet, pro Mol an Alphasäuren beträgt, um eine wässerige Schicht, die extrahierte Alphasäuren enthält, und eine organische Schicht zu bilden, die Betasäuren enthält,

(ii) Trennen der wässerigen und der organischen Schicht voneinander, und

(iii) Extrahieren der Betasäuren aus der organischen Schicht durch Behandlung derselben mit einer alkalischen Lösung, und

(iv) Oxydieren der Betasäuren durch Behandlung derselben mit einem Oxydationsmittel.

**Revendications**

1. Procédé pour l'extraction d'alpha-acides à partir d'extrait de houblon brut obtenu en traitant des houblons avec du dioxyde de carbone sous forme liquide ou à une pression supercritique, ce procédé comprenant l'ébullition d'un mélange de l'extrait brut avec un alcali, le rapport, dans le mélange, entre l'alcali et les alpha-acides dans l'extrait de houblon brut n'étant pas supérieur à 2,4/n moles d'alcali, n étant la valence de l'alcali, pour chaque mole des alpha-acides, afin de former une couche aqueuse contenant des alpha-acides extraits et une couche organique contenant des betaacides, et la séparation de la couche aqueuse et de la couche organique l'une de l'autre.

18

2. Procédé suivant la revendication 1 ou la revendication 2, dans lequel le rapport molaire alcali:alpha-acides dans l'extrait de houblon brut est tel qu'il fournit un excès d'alpha-acides.

3. Procédé suivant la revendication 2, dans lequel le rapport alcali:alpha-acides dans l'extrait de houblon brut est de 0,8/n:1 à 1,6/n:1 inclus.

4. Procédé suivant n'importe laquelle des revendications précédentes, dans lequel l'alcali est le carbonate, bicarbonate ou hydroxyde de potassium, ou le carbonate, bicarbonate ou hydroxyde de sodium.

5. Procédé suivant n'importe laquelle des revendications précédentes, dans lequel la concentration de l'alcali dans le mélange de l'extrait de houblon brut et d'un alcali aqueux est de 0,02 à 1 M inclus.

6. Procédé suivant n'importe laquelle des revendications précédentes, dans lequel la concentration en alpha-acides dans le mélange d'extrait de houblon brut et d'alcali aqueux est de 2 à 30 grammes inclus par 100 ml d'alcali aqueux.

7. Procédé suivant n'importe laquelle des revendications précédentes, dans lequel le mélange est soumis à ébullition durant une période de 15 minutes à 1 heure inclus.

8. Procédé suivant n'importe laquelle des revendications précédentes, dans lequel la séparation des couches aqueuse et organique l'une de l'autre est effectuée à une température de 40 à 80°C inclus.

9. Procédé de préparation d'iso-alpha-acides comprenant l'ébullition d'un milieu aqueux contenant des alpha-acides non isomérisés en solution dans le milieu aqueux, caractérisé en ce que le milieu aqueux a un pH de 7—8,5 inclus, et en ce que le procédé est effectué à une pression supérieure à la pression atmosphérique.

10. Procédé suivant la revendication 9, dans lequel la pression est de $1,3 \times 10^5$ à $4 \times 10^5$ Pa inclus.

11. Procédé suivant les revendications 9 ou 10, dans lequel le pH est 7—8.

12. Procédé suivant n'importe laquelle des revendications 9 à 11, dans lequel la concentration en alpha-acides dans le milieu aqueux n'est pas supérieure à 15 grammes d'alpha-acides par 100 ml de milieu aqueux.

13. Procédé suivant n'importe laquelle des revendications 9 à 12, comprenant l'étape additionnelle d'augmentation de la concentration des iso-alpha-acides dans le produit résultant par leur concentration sous pression réduite pour fournir un concentré d'iso-alpha-acides.

14. Procédé de préparation d'iso-alpha-acides à partir d'un extrait de houblon brut, ce procédé comprenant:

(i) l'ébullition d'un mélange de l'extrait de houblon brut avec un alcali aqueux, le rapport, dans le mélange, entre l'alcali et les alpha-acides dans l'extrait de houblon brut n'étant pas supérieur à 2,4/n moles d'alcali, n étant la valence de l'alcali, pour chaque mole d'alpha-acides, afin de former une couche aqueuse contenant les alpha-acides extraits et une couche organique contenant les bêta-acides,

(ii) la séparation des couches aqueuse et organique l'une de l'autre,

(iii) la dilution facultative de la couche aqueuse avec un milieu aqueux, et

(iv) l'ébullition de la couche aqueuse à une pression supérieure à la pression atmosphérique et à un pH de 7 à 8,5 inclus pour y isomériser les alpha-acides extraits.

15. Procédé pour la préparation de bêta-acides oxydés à partir d'un extrait de houblon brut, ce procédé comprenant:

(i) l'ébullition d'un mélange de l'extrait de houblon brut obtenu en traitant des houblons avec du dioxyde de carbone sous forme liquide ou à une pression supercritique avec un alcali aqueux, le rapport, dans le mélange, entre l'alcali et les alpha-acides dans l'extrait de houblon brut n'étant pas supérieur à 2,4/n moles d'alcali, n étant la valence de l'alcali, pour chaque mole d'alpha-acides, afin de former une couche aqueuse contenant des alpha-acides extraits et une couche organique contenant des bêta-acides,

(ii) la séparation des couches aqueuse et organique l'une de l'autre, et

(iii) l'extraction des bêta-acides hors de la couche organique par leur traitement avec une solution alcaline, et

(iv) l'oxydation des bêta-acides en les traitant avec un agent oxydant.